# EUROPÄISCHE PATENTANMELDUNG

(11) **EP 4 548 990 A1**
(43) Veröffentlichungstag der Anmeldung: **07.05.2025**
(21) Anmeldenummer: 23207361.9
(22) Anmeldetag: 02.11.2023
(51) Int. Cl.: B01D 5/00

(54) **PROZESSTECHNIKEINRICHTUNG MIT EINER KONDENSATIONSEINRICHTUNG SOWIE VERFAHREN ZUM BEREITSTELLEN EINER KONDENSATIONSEINRICHTUNG FÜR EINE PROZESSTECHNIKEINRICHTUNG**

(71) Anmelder: Siemens Aktiengesellschaft, 80333 München (DE)
(72) Erfinder: Kiener, Christoph, 81369 München (DE)
(74) Vertreter: Siemens Patent Attorneys

(57) **Zusammenfassung**

Die Erfindung betrifft eine Prozesstechnikeinrichtung (10) mit einer Kondensationseinrichtung (12) für die Kondensation eines gasförmigen Fluids mit mehreren aneinander angeordneten Wärmetauschereinheiten (16, 18, 20) und ferner ein Verfahren zum Bereitstellen der Kondensationseinrichtung (12).

## Beschreibung

Die Erfindung betrifft eine Prozesstechnikeinrichtung mit einer Kondensationseinrichtung für die Kondensation von gasförmigen Fluiden mit mehreren, entlang einer Kondensationsrichtung hintereinander angeordneten Wärmetauschereinheiten gemäß dem Patentanspruch 1. Ferner betrifft die Erfindung ein Verfahren zum Bereitstellen einer Kondensationseinrichtung für eine Prozesstechnikeinrichtung gemäß dem Patentanspruch 10.

Gasförmige Stoffgemische mit mehreren Komponenten, wie beispielsweise Substanzen und/oder Molekülarten, zu trennen, ist eine häufige technische Anforderung in der Industrie. Eine Möglichkeit zur Trennung ist die Auskondensation: Dabei wird das gasförmige Stoffgemisch, welches als Fluid vorliegt, so tief abgekühlt, dass der Taupunkt einer oder mehrerer kondensierbarer Komponenten des Stoffgemisches unterschritten wird und diese flüssig werden. Diese flüssigen Komponenten werden daraufhin von den gasförmigen Substanzen beziehungsweise Komponenten abgeschieden und gegebenenfalls anschließend durch Destillation beziehungsweise Rektifikation aufgetrennt und/oder gereinigt.

In der Reaktionstechnik entstehen bei hoher Temperatur kondensierbare Reaktionsprodukte häufig aus zuvor bei dieser Temperatur gasförmigen Ausgangsstoffen, die aus einem Gasstrom der Ausgangsstoffe oder Edukte abgetrennt werden können. Solch eine Reaktion kann beispielsweise eine Herstellung von Methanol, Ammoniak, Dimethylether oder eine Benzinsynthese betreffen.

Bei dem Abtrennen des Produkts, also des kondensierbaren Reaktionsprodukts, von den Edukten gibt es mehrere Herausforderungen:
So führt ein tiefes Abkühlen zur Löslichkeit der gasförmigen Bestandteile in dem Kondensat, wodurch diese mit der Flüssigkeit ebenfalls ausgetragen werden, was als Gaslöslichkeit bezeichnet wird. Je kälter die Kondensation betrieben wird, umso mehr Kondensat kann gesammelt werden, aber auch umso mehr Gas löst sich im Kondensat. Kondensation der zu erreichenden Massenstrommenge bei der höchstmöglichen Temperatur und anschließende Abkühlung ohne Kontakt zur Gasphase wäre daher anzustreben.

Eine weitere Herausforderung ist die Trennschärfe, die bezeichnet, dass Substanzströme so gut wie möglich separiert werden sollten, sodass beispielsweise möglichst wenig von einer Substanz A in einer Substanz B enthalten ist und umgekehrt.

Eine weitere Herausforderung ist die Energieeffizienz. So ist es vorteilhaft, Wärmeverluste beispielsweise nach außen zu minimieren beziehungsweise besonders gering zu halten und Wärmeeintrag in die Wärmesenke, die neben der durch Druckverlust P_{Eingang} nach P_{Ausgang} erzwungenen Strömungen die Triebkraft des Vorgangs der Kondensation darstellt, ebenfalls besonders gering zu halten beziehungsweise zu minimieren.

Darüber hinaus gilt es Druckverluste zu vermeiden beziehungsweise den Strömungswiderstand gering zu halten. So ist es von Vorteil, damit die Kondensation gut gelingen kann, dass große Oberflächen für einen Wärmeübergang vorgesehen sind, die ihrerseits sehr innig mit der Wärmeabfuhr der anfallenden Kondensationswärme in Verbindung stehen sollten. Dennoch sollte der Druckverlust für die Strömung durch dieses Auskondensationselement möglichst niedrig sein.

Des Weiteren gibt es die sogenannte fraktionierte Kondensation beispielsweise von Methanol und Wasser. Aus einem Gemisch einer CO₂-basierten Methanolsynthese kann beispielsweise bei genauer Temperaturführung über zwei Stufen eine wasserreiche und eine methanolreiche Phase erzeugt werden. Dabei können beispielsweise zur Energierückgewinnung für die Aufheizung Gegenstromwärmetauscher mit Eigenmedium in der Rückströmung vorgesehen sein. Eine bauliche Realisierung eines solchen Systems, insbesondere bei Hochdruckanwendungen, ist komplex und kann oft einen gesetzten Kostenrahmen übersteigen. Dabei ist es nicht einfach, beziehungsweise nicht trivial, die genannten Herausforderungen und somit andere Forderungen an Wärmeabfuhr, Oberfläche und Strömungswiderstand vorteilhaft zu beherrschen, da sich entsprechende Anforderungen widersprechen.

Im Stand der Technik, wenn die Kondensation beziehungsweise das Auskondensieren dadurch gelöst werden, dass ein Fluid meist erst bei großer Oberfläche mit gleichzeitig wenig Strömungsbarrieren, zum Beispiel im Rohrbündelwärmetauscher, abgekühlt wird und dann Aerosol bei wenig Druckverlust abgeschieden wird, wobei dies in der Regel in zwei nacheinander geschalteten Apparaturen erfolgt. So folgt hinter einem Wärmetauscher ein sogenannter Demistor, (englisch demister, "Entnebler, Aerosolbrecher"). Dabei bindet eine hohe Oberfläche mit wenig Druckverlust durch Aufprall den entstandenen Nebel und kleinste Flüssigkeitströpfchen in einem Gasstrom und ermöglicht ein Abtropfen, während Gas durch den Demistor hindurchtreten kann. Dabei werden meist alle kondensierbaren Komponenten auf einmal verflüssigt und die Auftrennung von Substanzgemischen nach ihren Kondensationseigenschaften (Konzentration, Taupunkt, Mischbarkeit) erfolgt dann im Anschluss in einer separaten Anlage, beispielsweise mittels Destillation oder Extraktion. Alternativ können Demistoren wie Filterkerzen mit einer hohen Oberfläche gebaut sein, wobei verschiedene Anordnungen möglich sind und das Fluid jedoch nur die Temperatur des Gasstroms aufweist und zusätzlich aus der Abscheidezone entnommen und danach weiter gekühlt werden braucht.

Die EP 3 599 075 A1 zeigt einen Reaktor zur Durchführung einer chemischen Gleichgewichtsreaktion.

Aufgabe der vorliegenden Erfindung ist es eine Prozesstechnikeinrichtung sowie ein Verfahren zum Bereitstellen einer Prozesstechnikeinrichtung zu schaffen, durch welche auch ein mehrere kondensierbare Substanzen aufweisendes fluidisches Stoffgemisch auf einfache Weise kondensiert werden kann und dabei die Prozesstechnikeinrichtung ein besonders vorteilhaftes Bauvolumen, einen kostengünstigen Aufbau und eine einfache Recyclebarkeit aufweist.

Diese Aufgabe wird erfindungsgemäß durch die Gegenstände der unabhängigen Patentansprüche gelöst. Vorteilhafte Ausgestaltungen und Weiterbildungen sind in den abhängigen Ansprüchen, der Beschreibung sowie den Figuren gezeigt.

Ein erster Aspekt der Erfindung betrifft eine Prozesstechnikeinrichtung mit einer Kondensationseinrichtung für die Kondensation eines insbesondere mehrere Komponenten aufweisenden gasförmigen Fluids. Die erfindungsgemäße Prozesstechnikeinrichtung umfasst mehrere entlang einer Kondensationsrichtung, welche im Wesentlichen mit der Längserstreckungsrichtung der Kondensationseinrichtung zusammenfallen kann, angeordnete Wärmetauschereinheiten. Die Kondensationsrichtung kann ferner einer Durchströmrichtung beziehungsweise der Hauptdurchströmrichtung des Fluids durch die Kondensationseinrichtung beschreiben beziehungsweise mit dieser zumindest teilweise zusammenfallen. Dabei stellt die Hauptdurchströmrichtung eine Richtung dar, in welcher im Wesentlichen die Temperatur abnehmen kann und somit das aus dem Fluid auskondensierte Fluid strömt beziehungsweise läuft oder gefördert wird.

Die insbesondere zumindest drei Wärmetauschereinheiten bilden die Kondensationseinrichtung. Eine erste der mehreren hintereinander angeordneten Wärmetauschereinheiten, ist insbesondere als Gegenstromkühler ausgebildet und durch mehrere zueinander parallel beabstandet angeordnete massive beziehungsweise volle, das heißt aus vollem Material gebildete, Platten ausgebildet, wobei jeweils zwei benachbarte Platten jeweils einen in Kondensationsrichtung orientierten Plattenkanal ausbilden und die Plattenkanäle insbesondere wechselseitig geöffnet sind. Ferner ist eine zweite der Wärmetauschereinheiten durch poröse Platten ausgebildet, welche jeweils die Platten der ersten Wärmetauschereinheit nahtlos fortführen und eine dritte der Wärmetauschereinheiten vorgesehen ist, welche aus sich abwechselnden, aneinander liegenden massiven und porösen Platten ausgebildet ist, wobei die Platten im Wesentlichen senkrecht zu den Platten der ersten und zweiten Wärmetauschereinheit angeordnet sind und wenigstens einen Kühlkanal und in einem in Kondensationsrichtung liegenden Endbereich einen Sammelkanal für das Kondensat aufweisen und die mehreren Wärmetauschereinheiten monolithisch ausgebildet sind.

Die Plattenkanäle sind insbesondere aufgrund ihrer wechselseitigen Öffnung derart durchströmt, dass in einem der Plattenkanäle, das Fluid entlang der Hauptdurchströmrichtung strömt, wobei das durchströmende Fluid im Bereich der zweiten Wärmetauschereinheit Kondensat abgibt und daraufhin in einem benachbarten Plattenkanal entgegen der Hauptdurchströmrichtung zurückströmt.

Die Prozesstechnikeinrichtung kann beispielsweise einer Reaktionseinrichtung nachgeordnet oder als eine Komponente letzterer ausgebildet sein und dient insbesondere dem eingangs beschriebenen Abscheiden einer Komponente durch Kondensation aus dem Fluid. Dafür weist die Prozesstechnikeinrichtung die Kondensationseinrichtung auf, welche zumindest aus den drei monolithisch ausgebildeten Wärmetauschereinheiten gebildet ist, wobei die erste Wärmetauschereinheit als Gegenstromkühler ausgebildet ist, welche von der zweiten Wärmetauschereinheit, welche als Kondensor ausgebildet ist, begrenzt wird und diese an die dritte Wärmetauschereinheit, welche als Kondensatorkühler ausgebildet ist, angebaut ist. Dabei unterscheiden sich die erste Wärmetauschereinheit und die zweite Wärmetauschereinheit im Wesentlichen durch die Beschaffenheit des Werkstoffs. So ändert sich die Porosität der Platten zwischen erster und zweiter Wärmetauschereinheit, wobei in der ersten Wärmetauschereinheit die Platten aus Vollmaterial, das heißt einem vollen beziehungsweise massiven und somit fluidundurchlässigen Werkstoff gebildet sind, wohingegen die Platten der zweiten Wärmetauschereinheit porös sind, sodass sie eine besonders große innere Oberfläche aufweisen können und von Fluid beziehungsweise Kondensat durchströmbar sind, wobei die Porosität in Abhängigkeit des abzuscheidenden Kondensats gewählt werden kann, sodass beispielsweise durch die Porosität auch eine Art Kapillarwirkung ausgebildet werden kann. Die Dimensionierung der Platten kann zwischen erster und zweiter Wärmetauschereinheit ebenfalls unterschiedliche sein. Die porösen Strukturen insbesondere der zweiten aber auch der dritten Wärmetauschereinheit dienen als Phasenabscheider für das Kondensat.

Um das Kondensat, welches die zweite Wärmetauschereinheit passiert, besonders vorteilhaft zu dem Sammelkanal leiten zu können und dabei vorteilhaft abzukühlen beziehungsweise zu unterkühlen, ist die dritte Wärmetauschereinheit teilweise porös (zum Leiten) und teilweise aus Vollmaterial (Kühlkörper) gebildet. Die dritte Wärmetauschereinheit ist insbesondere vollständig von wenigstens einem Kühlkanal, wobei wenigstens ein durchgängiger Kühlkanal aufweist, welcher von einem insbesondere kalten Kühlmittel zum Kühlen zumindest der dritten Wärmetauschereinheit durchströmt werden kann, sodass eine besonders vorteilhafte Kondensation und dadurch ein Abfließen des Kondensats in den Sammelkanal ermöglicht wird, wobei der Sammelkanal in Kondensationsrichtung an dem der zweiten Wärmetauschereinheit abgewandten Ende der dritten Wärmetauschereinheit angeordnet ist und der dortige Endbereich insbesondere durch eine massive Platte begrenzt ist, sodass kein Kondensat durch die dritte Wärmetauschereinheit hindurchkommt, sondern sich in dem Sammelkanal sammelt.

Mit anderen Worten wird ein Konzept einer Prozesstechnikeinrichtung vorgestellt, welche ihrerseits eine Folge mehrerer Wärmetauschsysteme, die in einem einzigen Werkstoffteil, insbesondere Metallteil monolithisch zusammengefasst sind, vorgestellt. Dabei ist insbesondere ein Vorteil, dass die Kondensatoreinheit mittels additiver Fertigung gebildet sein kann, sodass poröse und massive Bereiche in einem Fertigungsschritt gemeinsam hergestellt werden können, wodurch beispielsweise eine besonders kompakte und/oder günstige Bauform ermöglicht wird.

Durch die gezeigte Prozesstechnikeinrichtung ergibt sich der Vorteil, dass sich auf besonders vorteilhafte Weise wenigstens ein Kondensat aus einem gasförmigen Fluid abscheiden lässt.

In vorteilhafter Ausgestaltung der Erfindung ist die Kondensationseinrichtung in einem von zumindest einer Einlassöffnung und einer Auslassöffnung für das Fluid aufweisenden Wandung begrenzten Reaktionsraum derart angeordnet, dass seine Kondensationsrichtung beziehungsweise eine im Wesentlichen oder in weiten Teilen mit der Kondensationsrichtung zusammenfallenden Durchströmungsrichtung mit der Einlassöffnung und der Auslassöffnung korrespondiert. Durch die Wandung kann insbesondere ein Druckbehälter ausgebildet werden, sodass das Fluid die Kondensationseinrichtung mit einem bestimmten vorgebbaren und beispielsweise für eine Abspaltung günstigen Druck beaufschlagt werden kann. Mit anderen Worten ist somit ein Druckbehälter vorgesehen, der einen Reaktionsraum mit einem Einlass für Edukte und beispielsweise einem ersten Auslass für Produkte aufweist, wobei in dem Reaktionsraum die Kondensationseinrichtung vorgesehen ist. Zusätzlich kann insbesondere in der Wandung wenigstens eine weitere Öffnung für das den Kühlkanal durchströmende Kühlmittel und/oder den Sammelkanal vorgesehen sein. Durch die Ausführungsform ergibt sich der Vorteil, dass auf besonders vorteilhafte Weise die Kondensationseinrichtung für eine Reaktion von dem Fluid durchströmbar ist.

In weiterer vorteilhafter Ausgestaltung der Erfindung ist die Kondensationseinrichtung einstückig aus einem Werkstoff ausgebildet. Mit anderen Worten ist die Kondensationseinrichtung als ein Teil aus einem einzigen Werkstoff gefertigt, das heißt die mehreren Wärmetauscher, insbesondere die wenigstens drei Wärmetauscher sind als ein Bauteil ausgebildet. Dadurch ergibt sich beispielsweise der Vorteil, dass ein Wärmeübertrag zwischen den einzelnen Wärmetauschereinheiten auf vorteilhafte Weise ermöglicht wird. Ferner brauchen die einzelnen Wärmetauschereinheiten beispielsweise nicht mittels Rohrleitungen oder dergleichen verbunden werden, wodurch die Effizienz besonders groß ist.

In weiterer vorteilhafter Ausgestaltung der Erfindung weist die dritte Wärmetauschereinheit wenigstens zwei Kühlkanäle, welche insbesondere quer zur Kondensationsrichtung auf einer jeweiligen Seite des Sammelkanals verlaufen, auf, wobei diese zwei Kühlkanäle durch eine jeweilige Brücke, die in der jeweiligen massiven Platte ausgebildet ist, verbunden sind. Mit anderen Worten sind zwei Kühlkanäle beziehungsweise Kühlwasserkanäle, wobei einer als Zu- und einer als Ablauf für ein Kühlmedium ausgebildet ist, für einen Austausch des Kühlmediums miteinander über mehrere in den massiven Platten ausgebildeten fluidisch leitendenden Brücken beziehungsweise Kanäle verbunden. Dadurch ergibt sich der Vorteil, dass eine besonders effiziente Kühlung zumindest der dritten Wärmetauschereinheit ermöglicht wird.

In weiterer vorteilhafter Ausgestaltung der Erfindung ist beziehungsweise sind entlang einer Durchströmungsrichtung vor der ersten Wärmetauschereinheit wenigstens eine weitere Wärmetauschereinheit und insbesondere zwei Wärmetauschereinheiten angeordnet. Die Durchströmungsrichtung ist im Wesentlichen deckungsgleich mit der Kondensationsrichtung beziehungsweise sind die Durchströmungsrichtung und die Kondensationsrichtung gleich, bis es in der ersten Wärmetauschereinheit zur Kondensation kommt, wobei dann das Kondensat weiter durch die zweite und dritte Wärmetauschereinheit läuft und das noch gasförmige Fluid einen anderen Weg durch den Kondensationseinrichtung nehmen kann, insbesondere entlang der Plattenkanäle der als Gegenstromkühler ausgebildeten ersten Wärmetauschereinheit. Mit anderen Worten ist beziehungsweise sind fluidisch leitend mit der Kondensationseinrichtung und somit beispielsweise insbesondere in dem Reaktorraum innerhalb der Wandung wenigstens eine weitere Wärmetauschereinheit und insbesondere zwei Wärmetauschereinheiten angeordnet, welche insbesondere dazu dienen, das gasförmige Medium für die in der Kondensationseinrichtung durchzuführende Kondensation vorzutemperieren. Dadurch ergibt sich der Vorteil, dass die Prozesstechnikeinrichtung besonders effizient betrieben werden kann.

In weiterer vorteilhafter Ausgestaltung der Erfindung ist beziehungsweise sind die wenigstens eine weitere Wärmetauschereinheit als Reaktor, beispielsweise als Rohrreaktor und insbesondere als Festbettrohrreaktor oder Rohrschlangenreaktor, und/oder als Wärmerohr beziehungsweise Heat-Pipe, welche insbesondere mit warmen Kühlmittel verwendet wird, ausgebildet. Dabei kann der Reaktor (insbesondere eine Komponente der Reaktionseinrichtung) beispielsweise einen Reaktionsbereich für (gasförmige) Edukte aufweisen, indem zumindest teilweise das in der Kondensationseinrichtung abzuscheidende Produkt gebildet wird. Zusätzlich oder alternativ sind die erste Wärmetauschereinheit als Plattenwärmetauscher und/oder Gegenstromkühler (Englisch Feed-Effluent-Heat Exchanger), die zweite Wärmetauschereinheit als Kondensor und/oder als Kondensationssammler und die dritte Wärmetauschereinheit als Unterkühler ausgebildet. Mit anderen Worten ist jede Wärmetauschereinheit funktional so ausgebildet, dass ihre Abfolge eine besonders vorteilhafte Kondensation der Komponente des gasförmigen Fluids ermöglicht. Dadurch ergibt sich der Vorteil, dass die Prozesstechnikeinrichtung besonders vorteilhaft betrieben werden kann.

In weiterer vorteilhafter Ausgestaltung der Erfindung weist die Kondensationseinrichtung wenigstens zwei, insbesondere unmittelbar, aneinander grenzende erste Wärmetauschereinheiten auf und in wenigstens den in Kondensationsrichtung hinten liegenden ersten Wärmetauschereinheiten beziehungsweise in den Wärmetauschereinheiten der wenigstens zwei ersten Wärmetauschereinheiten, welche nicht an die zweite Wärmetauschereinheit grenzen, ist eine der massiven Platten zumindest teilweise durch eine poröse Platte ersetzt, beziehungsweise ist der Werkstoff wenigstens einer Platte in zumindest einem Bereich porös statt massiv. Mit anderen Worten sind zwei erste Wärmetauschereinheiten aneinander geflanscht, wobei eine der Wärmetauschereinheiten wenigstens ein poröses Teilstück einer Platte aufweist. Dadurch ergibt sich der Vorteil, dass in der Wärmetauschereinheit, welche zumindest eine teilweise poröse Platte aufweist, eine bereits dort stattfindende Kondensation in zumindest einem Teil des somit entstehenden Kondensats in der porösen Platte sammeln kann. Dadurch ist auf vorteilhafte Weise eine fraktionierte beziehungsweise mehrstufige Kondensation möglich, wenn beispielsweise das gasförmige Fluid wenigstens zwei kondensierbare Komponenten umfasst.

In weiterer vorteilhafter Ausgestaltung der Erfindung ist die wenigstens eine poröse Platte mit einem, insbesondere mittels Kapillarleitung gebildeten, Ableitkanal verbunden. Mit anderen Worten ist ein Element vorgesehen, durch welches das in der zumindest teilweise porösen Platte in dem porösen Bereich kondensierte Kondensat aus dieser ersten Wärmetauschereinheit abgeleitet werden kann. Dadurch ergibt sich der Vorteil, dass auf besonders vorteilhafte Weise eine fraktionierte Kondensation ermöglicht wird.

In weiterer vorteilhafter Ausgestaltung der Erfindung ist die Wandung doppelwandig mit einer zwischen zwei Wänden liegenden Vakuumkammer ausgebildet, wobei die innenliegende der Wände dünner als die außenliegende ist und in der Vakuumkammer eine Gitterstruktur ausgebildet ist. Mit anderen Worten ist die Kondensationseinrichtung zur Isolierung mit einem Vakuummantel umgeben, wobei ein Gitter mit entsprechend festen Streben auf eine äußere massive Wand aufgebracht wird und innerhalb des Gitters beispielsweise noch Trennwände oder mehrere Trennwände zur Abschirmung von Wärmestrahlung eingebracht sein können. Dadurch ergibt sich der Vorteil, dass die Prozesstechnikeinrichtung besonders effizient betrieben werden kann.

Ein zweiter Aspekt der Erfindung betrifft ein Verfahren zum Bereitstellen einer Kondensationseinrichtung für eine Prozesstechnikeinrichtung gemäß dem ersten Aspekt der Erfindung, wobei in Abhängigkeit von einem Fluid, einem daraus zu kondensierenden Kondensat und/oder einer Prozesseigenschaft, wie beispielsweise einer Ausbeute, wenigstens eine Größe, beispielsweise eine Abmessung einer Dimension eines der mehreren Wärmetauscher, eine Porengröße und/oder dergleichen, der Kondensationseinrichtung vorgegeben wird und dadurch ein dreidimensionales Modell der Kondensationseinrichtung erzeugt wird. Mit anderen Worten wird die Kondensationseinrichtung an eine Zielgröße angepasst bereitgestellt. So kann beispielsweise eine Optimierung nach Produktmenge und/oder Reinheit und Trennschärfenoptimierung erfolgen. So kann beispielsweise durch eine Dimensionierung der wenigstens einen Größe die Kondensationseinrichtung so gebildet sein, dass beispielsweise eine Menge von ausleitbarem Kondensat, eine Reinheit des Abflussgases, eine Reinheit des Kondensats von Gasbestandteilen und/oder eine Reinheit verschiedener Kondensate bei mehreren Teilkondensationen besonders vorteilhaft und insbesondere hoch ist.

Darüber hinaus kann eine energetische Optimierung erfolgen, sodass möglichst viel Wärme beispielsweise aus der zweiten Wärmetauschereinheit im Abflussgases (trockenes Gas, Englisch: Lean Gas) ausgetragen wird, möglichst wenig Wärme ins Kühlwasser verloren wird oder für bestimmte Kühlwassertemperaturen das Optimum der Trennung erreicht wird. Darüber hinaus können Druckverluste für das einströmende Fluid, das nasse Gas (Englisch: Rich Gas) oder das ausströmende trockene Gas optimiert werden. Dabei wird insbesondere ein automatisiertes Konstruktionssystem vorgehalten, welches beispielsweise durch eine elektronische Recheneinrichtung gesteuert wird und in welchem beispielsweise die wenigstens eine Größe vorgegeben wird, sodass anhand der Vorgabe eine einfache Variation des dreidimensionalen Modells ermöglicht wird. Dabei sind vorteilhafte Ausgestaltungen und Weiterbildungen des ersten Aspekts der Erfindung als Vorteile, vorteilhafte Ausgestaltungen und Weiterbildungen des zweiten Aspekts der Erfindung anzusehen und umgekehrt.

In weiterer vorteilhafter Ausgestaltung der Erfindung wird das Modell im Wesentlichen aus sich wiederholenden Einheitszellen gebildet und die wenigstens eine vorgegebene Größe charakterisiert die jeweilige Einheitszelle. Mit anderen Worten kann die Kondensationseinrichtung der Prozesstechnikeinrichtung derart bereitgestellt werden, um für eine entsprechende Reaktion, das heißt für ein bestimmtes Fluid und ein bestimmtes Kondensat verwendet werden zu können, indem lediglich eine Einheitszelle, welche durch Wiederholung beziehungsweise Aneinanderreihung in einer Quer- und einer Längsrichtung die Kondensationseinrichtung bildet. "Im Wesentlichen" hier, das beispielsweise in Randbereichen oder im Bereich des wenigstens einen Kühlkanals und/oder Sammelkanals Anpassung an der Einheitszelle möglich sind. Dabei umfasst die Einheitszelle Elemente sowohl der ersten, der zweiten als auch der dritten Wärmetauschereinheit. Dadurch ergibt sich der Vorteil, dass die Prozesstechnikeinrichtung auf einfache Weise an die gewünschte Reaktion, bei welcher das Produkt auskondensiert werden soll, anpassbar ist.

In weiterer vorteilhafter Ausgestaltung der Erfindung wird die Kondensationseinrichtung anhand des Modells mittels additiver Fertigung und/oder aus einem metallischen Werkstoff gebildet. Mit anderen Worten dient das Modell als Eingabe für eine additive Fertigungseinrichtung, wie beispielsweise einen Lasersinter, sodass die Kondensationseinrichtung beispielsweise aus metallischem Pulver mittels Laserschmelzen gefertigt werden kann. Dabei muss je nach Ausführungsform der Kondensationseinrichtung gegebenenfalls während der Fertigung immer wieder metallisches Pulver entfernt werden. Durch die additive Fertigung und den metallischen Werkstoff ergibt sich der Vorteil, dass die Kondensationseinrichtung trotz ihrer möglichen komplexen Form besonders einfach herzustellen ist. Darüber hinaus ergibt sich der Vorteil, dass bei einem Lebensende der Kondensationseinrichtung diese aufgrund des metallischen Werkstoffs besonders einfach recycelt werden kann.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Es zeigt:
- FIG 1: eine schematische Perspektivansicht einer Kondensationseinrichtung für eine Prozesstechnikeinrichtung, welche drei Wärmetauschereinheiten aufweist;
- FIG 2: ein schematisches Ablaufdiagramm für eine Kondensationsreaktion, aus einem gasförmigen Fluid, in welchem mittels der Prozesstechnikeinrichtung gemäß FIG 1 eine Komponente kondensieren kann;
- FIG 3: eine geschnittene schematische Seitenansicht der Kondensationseinrichtung gemäß FIG 1;
- FIG 4: eine schematische Perspektivansicht einer ersten Ausführungsform einer Einheitszelle, durch welche die Kondensationseinrichtung ausbildbar ist;
- FIG 5: eine schematische Perspektivansicht einer zweiten Ausführungsform der Einheitszelle;
- FIG 6: eine schematische Perspektivansicht einer zweiten Ausführungsform der Kondensatoreinrichtung, wobei die erste der Wärmetauschereinheiten doppelt ausgeführt ist;
- FIG 7: ein schematisches Ablaufdiagramm einer mittels der Kondensationseinrichtung gemäß FIG 6 durchführbaren Kondensationsreaktion, welche eine fraktionierte Kondensation mit wenigstens zwei Komponenten darstellt;
- FIG 8: eine schematische Perspektivansicht einer weiteren Wärmetauschereinheit welche als Festrohrreaktor in Kombination mit einer Heat Pipe ausgebildet ist; und
- FIG 9: ein schematisches Ablaufdiagramm der Reaktionszeichnung bei Verwendung der Wärmetauschereinheit gemäß FIG 8 zusammen mit der Kondensationseinrichtung gemäß FIG 1.

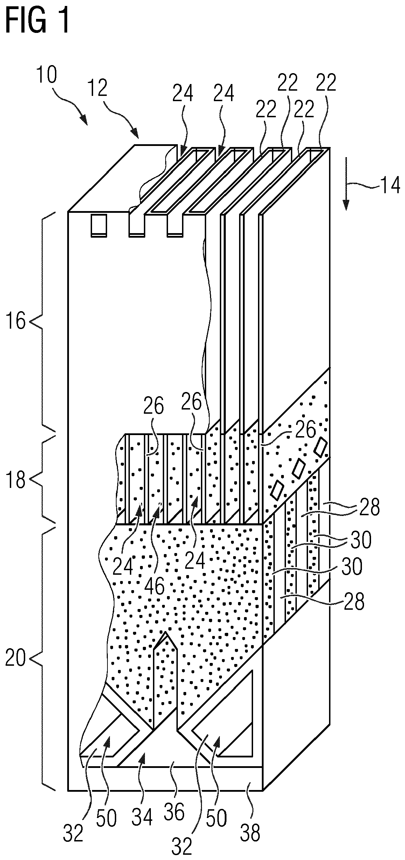

FIG 1 zeigt eine schematische Perspektivansicht eines Teils einer Prozesstechnikeinrichtung 10, und zwar eine für die Prozesstechnikeinrichtung 10 ausgebildete Kondensationseinrichtung 12. Die Prozesstechnikeinrichtung 10 und insbesondere die Kondensationseinrichtung 12 dienen für die Kondensation eines gasförmigen Fluids. Die Kondensationseinrichtung 12 weist mehrere entlang einer Kondensationsrichtung 14, welche hier mit der Längserstreckungsrichtung der Kondensationseinrichtung 12 zusammenfällt, des Fluids hintereinander angeordnete, in dem gezeigten Ausführungsbeispiel drei Wärmetauschereinheiten 16, 18 und 20 auf, wobei eine erste der Wärmetauschereinheiten 16 als Gegenstromkühler und durch mehrere zueinander parallel beabstandete angeordnete massive Platten 22 ausgebildet ist, wobei jeweils zwei benachbarte Platten 22 jeweils einen in Kondensationsrichtung 14 orientierten Plattenkanal 24 ausbilden, wobei die Plattenkanäle 24 wechselseitig geöffnet sind. Die zweite der Wärmetauschereinheiten 18 ist als Kondensor und durch poröse Platten 26 ausgebildet, welche jeweils die Platten 22 der ersten Wärmetauschereinheit 16 nahtlos fortführen und somit aus einer Verlängerung dieser jedoch nun anstatt mit massivem durch poröses Material gebildet sind. Ferner umfasst die Kondensationseinrichtung 12 eine dritte der Wärmetauschereinheiten 20, welche als Kondensatkühler aus sich abwechselnden aneinander liegenden vollen beziehungsweise massiven Platten 28 und porösen Platten 30 ausgebildet ist, welche im Wesentlichen senkrecht zu den Platten 22 und 26 der ersten und zweiten Wärmetauschereinheit 16 und 18 angeordnet sind und wenigstens einen Kühlkanal 32 (im Ausführungsbeispiel zwei), welche insbesondere während der Reaktion von kalten beziehungsweise kühlen Kühlmittel durchströmt wird, und einen Sammelkanal 36 aufweist. Der Sammelkanal 36 liegt in einem in Kondensationsrichtung 14 liegenden Endbereich 34, welcher insbesondere durch eine massive Bodenplatte 38 begrenzt wird. Dabei sind die mehreren Wärmetauschereinheiten 16, 18 und 20 monolithisch ausgebildet.

Die Prozesstechnikeinrichtung 10 dient dazu, gasförmige Stoffgemische mit mehreren Komponenten, insbesondere Substanzen der Molekülarten, zu trennen. Dabei erfolgt die Trennung durch Auskondensation, wobei das gasförmige Stoffgemisch beziehungsweise Fluid, welches als nasses Gas 40 eingeleitet wird, insbesondere in der Kondensationseinrichtung 12 so weit abgekühlt wird, dass eine oder mehrere kondensierbare Komponenten flüssig werden, die dann von der gasförmigen Substanz beziehungsweise Fluid abgeschieden werden.

Mit anderen Worten können in der Reaktionstechnik häufig kondensierbare Reaktionsprodukte aus zuvor gasförmigen Ausgangsstoffen, die aus dem Gasstrom de Edukte abgetrennt werden, erzeugt werden. So kann die Prozesstechnikeinrichtung 12 beispielsweise bei der Herstellung von Methanol, Ammoniak, Dimethylether oder eine Benzinsynthese verwendet werden.

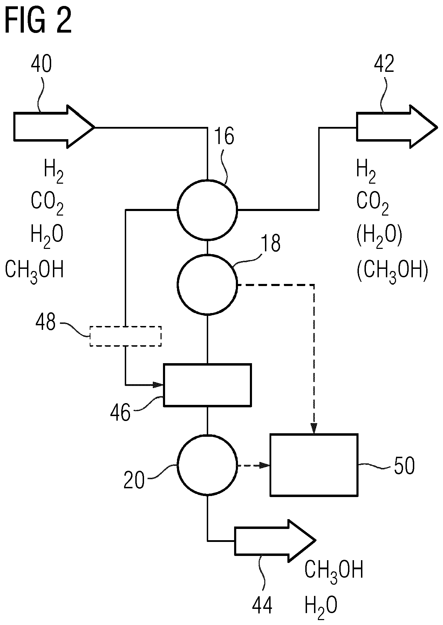

FIG 2 zeigt exemplarisch die Herstellung von Methanol in einem schematischen Reaktionsdiagramm, wobei zur Abscheidung von Methanol und Wasser gesättigtes Gas beziehungsweise nasses Gas 40 als das Fluid in die Kondensationseinrichtung 12 eingebracht, wobei mageres Gas beziehungsweise trockenes Gas 42 die Kondensationseinrichtung 12 verlässt, welches um das Kondensat 44 erleichtert ist. Das Kondensat 44 wird insbesondere im Phasenscheider 46 von dem Gas getrennt. Der Phasenscheider 46 wird insbesondere durch die porösen Platten 26 und 30 der zweiten und dritten Wärmetauschereinheit 18 und 20 gebildet, beziehungsweise erfolgt dort die Trennung des Kondensats 44 analog einem Kondensor. Dabei kann insbesondere in der dritten Wärmetauschereinheit 20 durch Leiten von Kühlmittel durch den wenigstens einen Kühlkanal 32 ein vorteilhaftes Unterkühlen des Kondensats 44 erreicht werden kann, sodass sich dies vorteilhaft im Sammelkanal 36 sammelt und quasi so durch die schwammartige Struktur der porösen Platten 26 und 30 nach unten abgeführt wird. Das Kondensat 44 umfasst im gezeigten Ausführungsbeispiel im Wesentlichen ein Methanol-Wasser-Gemisch beziehungsweise Methanol in seiner flüssigen Phase.

Aufgrund der massiven Platten 28 der dritten Wärmetauschereinheit 20 erfolgt eine gute Kontaktierung und somit Kühlung der porösen Platten 26 der zweiten Wärmetauschereinheit 18. Dabei ist eine Solltemperatur 48 vorgebbar und das Kühlmittel, insbesondere kaltes Kühlwasser 50, weist ebenfalls eine vorgegebene Temperatur auf.

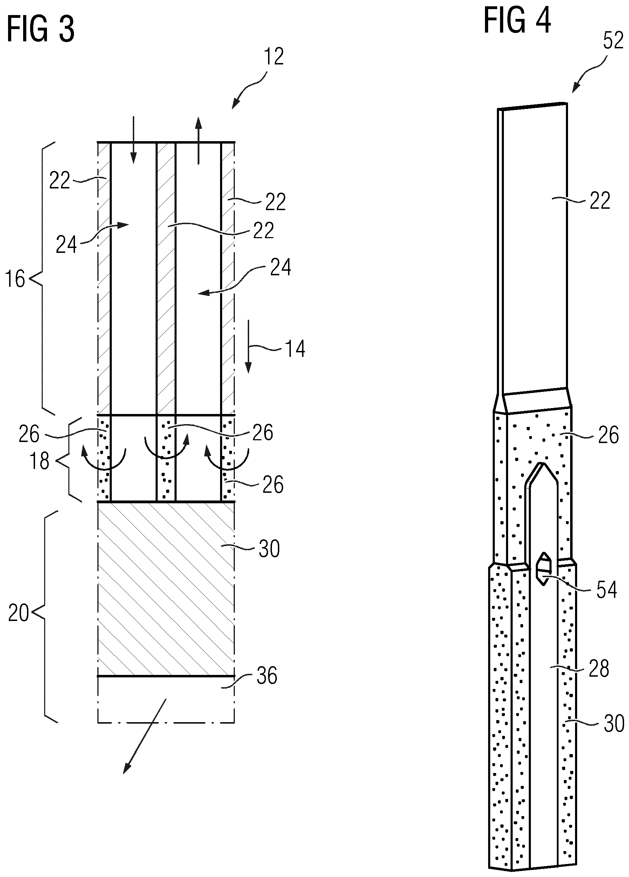

FIG 3 zeigt schematisch in einer seitlichen Schnittansicht einen Ausschnitt der Kondensationseinrichtung 12, wobei die Plattenkanäle 24, welche abwechselnd geöffnet sind, hervorgehoben sind, sodass in einem der Plattenkanäle 34 das gesättigte Gas beziehungsweise nasses Gas 40 einströmt und in einem jeweiligen Nachbarkanal das magere Gas beziehungsweise trockenes Gas 42 ausströmt. Dabei ist eine jeweilige Verlängerung der massiven Platte 22 durch die poröse nahtlos übergehende Platte 26 gebildet ist, welche von dem Gas durchströmbar ist beziehungsweise durchströmt wird, wobei aufgrund der Temperatur der Platten 26, das Gas "getrocknet" wird indem das Kondensat 44 beim Durchströmen kondensiert. Die massiven Platten 28 der dritten Wärmetauschereinheit 32 können bis in die Zwischenräume der zweiten Wärmetauschereinheit 18 reichen können und diese so vorteilhaft kühlen.

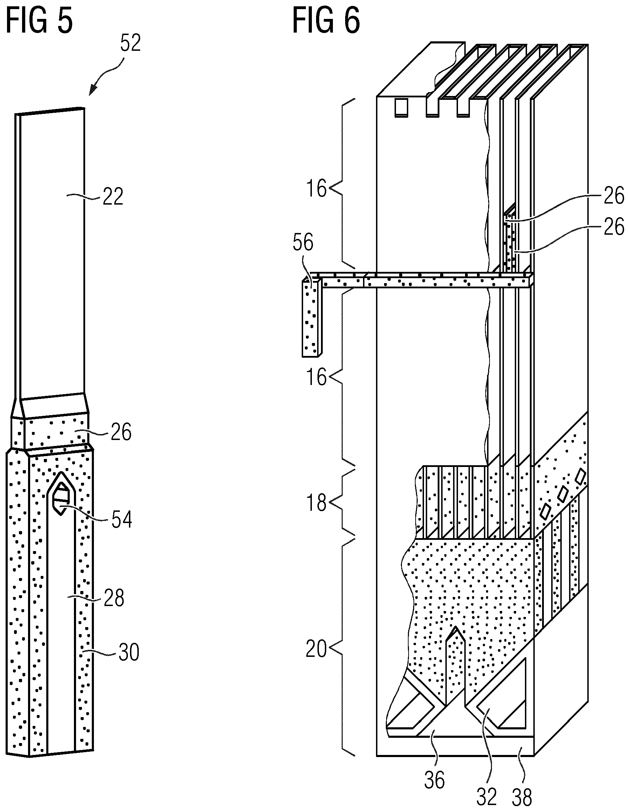

Dieses Ineinanderreichen zeigt beispielsweise die erste Ausführungsform einer Einheitszelle 52, wie sie in FIG 4 gezeigt ist, im Gegensatz zu der Ausgestaltungsform der Einheitszelle 52 der FIG 5, wobei jeweils in der massiven Platte 28 beziehungsweise den zugehörigen Ausschnitt in der Einheitszelle 52 eine Brücke 54 gezeigt ist, welche in der voll ausgebildeten Kondensationseinrichtung 12 die zwei Kühlkanäle 32 verbindet. Die Elementarzellen beziehungsweise Einheitszellen 52, wie zwei Ausführungsbeispiele in den FIG 4 und 5 gezeigt sind, sind insbesondere bei einem Verfahren zum Bereitstellen der Kondensationseinrichtung 12 von Vorteil.

In Abhängigkeit von der Reaktion, welche das kondensierte Produkt bildet, sollte die Solltemperatur 48 sollte insbesondere so gewählt werden, dass sie ausreichend kalt ist, damit ausreichend Kondensation eintritt, aber ausreichend heißt, damit nicht beispielsweise zu viel Kohlendioxid beziehungsweise CO₂ im Kondensat 44 gelöst wird.

Die erste Wärmetauschereinheit 16 beziehungsweise der Gegenstromkühler ist aus Platten 22 aus massivem Material beziehungsweise Werkstoff gefertigt, welches somit für das Fluid nicht passierbar ist. Das Material kann, je nach Anwendung, mit ganz verschiedenen Eigenschaften gewählt werden, beispielsweise weist die Legierung IN625 eine Wärmekapazität von 11 W/m*K bis Kupfer von 400 W/m*K oder Silber von 429 W/m*K auf. Ferner können keramische Materialien ausgewählt werden. Die Plattenkanäle 24 sind, wie bereits gesagt, wechselseitig geöffnet und somit für Fluid zugängig. Die Anzahl der Platten 22 ist frei wählbar, ferner sind Zwischenräume und Dicke der Platten 22, 26, 28, 30 frei wählbar. Die Zwischenräume zwischen den Platten 22, 26, 28, 30 können ferner durch porös gebautes Material mit geringen Strömungswiderstand gefüllt sein. Die Platten 22 sind vorteilhafterweise dünn, wobei eine Dicke der Platten 22 beispielsweise im Bereich zwischen 0,1 und 2 mm liegen können, eine Höhe im Bereich zwischen 20 mm bis 2.500 mm und die Breite im Bereich zwischen 10 mm und 1000 mm.

Diese Dimensionen beziehungsweise Abmessungen sind insbesondere als wenigstens eine Größe in einem Verfahren zum Bereitstellen der Kondensationseinrichtung 12 beispielsweise vorgebaut.

Die zweite Wärmetauschereinheit 18 setzt die Platten 22 fort aber nun als poröse Metallfrittenplatten beziehungsweise poröse Platten 26, wobei die Dimensionen der Platten analog zur ersten Wärmetauschereinheit 16 ausgebildet sein können, d.h. der Bereich für die Decke, der Bereich für die Höhen, der Bereich für die Breite der porösen Platten 26 ist gleich, ferner ist die Anzahl der Platten genauso groß wie die Anzahl der massiven Platten 22. Die Plattenkanäle 24 können ferner mit Löchern versehen werden, beispielsweise für eine leichtere Passage des Fluids als Option. Als Material kann ebenfalls von der Legierung IN625 bis Kupfer, ferner keramische Materialien, poröse Materialien aus der identischen chemischen Zusammensetzung aber aus einem Auswahlkatalog zuvor reproduzierbarer gefertigter Strukturen mit bestimmten Porositäten beziehungsweise dadurch gebildeten freien Volumen.

Der Kondensationskühler beziehungsweise die dritte Wärmetauschereinheit 20 ist aus demselben Material wie die Wärmetauschereinheiten in 16 und 18 gebildet, wobei sich Porositäten in den verschiedenen Sektionen beziehungsweise Wärmetauschereinheiten 16, 18, 20 unterscheiden können. Im unteren Bereich beziehungsweise im Endbereich 34 sind wenigstens zwei Kühlwasserkanäle 32 vorgesehen und der Sammelkanal 34 wobei einer der Kühlwasserkanäle 32 als Eingang und der andere als Ausgang dient und diese in den massiven Platten 28 durch die vorangezeigten Brücken 54 verbunden sind.

Nach unten wird die Kondensationseinrichtung 12 am Endbereich 34 der dritten Wärmetauschereinheit 20 durch eine massive und insbesondere druckfeste Bodenplatte 38 abgeschlossen.

Die massiven Platten 28 und porösen Platten 30 müssen nicht gleich hoch sein. Die Plattendicke kann wechseln oder identisch sein, dabei liegt die Dicke in einem Bereich zwischen 3 und 15 mm für sowohl die massiven Platten 28 als auch die porösen Platten 30. Die Höhe kann beispielsweise jeweils für die massiven Platten 28 und die porösen Platten 30 in einem Bereich zwischen 10 mm bis 300 mm liegen. Der Sammelkanal 36 kann insbesondere umgekehrt trichterförmig oder dreieckig ausgebildet sein.

Die massiven Platten 28 können somit frei in den Raum der zweiten Wärmetauschereinheit 18 eindringen. Die massiven Platten können sich beispielsweise nach oben trapezartig verjüngen. Die dünnen massiven Platten 22 sind weitergeführt zu den porösen Platten 28 und beispielsweise insbesondere als Metallsinterfrittenstruktur für das vorgekühlte Gas gebildet. Die porösen Platten 26 und 30 können durch Wärmeleitung der massiven Kühlelemente, den Platten 28, das Abführen von Kondensationswärme und Unterkühlung des flüssigen Kondensats 44 dienen. Insbesondere mittels Kapillarleitung des Kondensats in den Poren des insbesondere als Metallporengefüge ausgebildeten porösen Platten 26 und 30 der Wärmetauschereinheiten 18 und 20 gelingt eine Führung in die insbesondere offene Sammelzone, welche durch den Sammelkanal 34 gebildet ist.

Die massive Bodenplatte 38 kann beispielsweise Teil einer Wandung sein, durch welche ein Druckbehälter gebildet ist, welcher einen Reaktionsraum der Prozesstechnikeinrichtung 10 begrenzt, in dem die Kondensationseinrichtung 12 angeordnet ist. In der Wandung sind wenigstens eine Einlassöffnung und eine Auslassöffnung vorgesehen, durch welche das nasse Gas 40 eingebracht beziehungsweise das trockene Gas 42 ausgebracht werden kann. Die Wandung kann insbesondere doppelwandig in einer zwischen zwei Wänden liegenden Vakuumkammer ausgebildet sein, wobei die innen liegende der Wände dünner als die außenliegende ist und in der Vakuumkammer eine Gitterstruktur ausgebildet ist.

FIG 6 zeigt in einer schematischen Perspektivenansicht eine zweite Ausführungsform der Kondensationseinrichtung 12 in welcher wenigstens zwei unmittelbar aneinandergrenzende erste Wärmetauschereinheiten 16 ausgebildet sind und in wenigstens der in Kondensationsrichtung 14 hinten liegenden der ersten Wärmetauschereinheiten 16 eine der massiven Platten 22 zumindest teilweise durch eine poröse Platte 26 ersetzt ist.

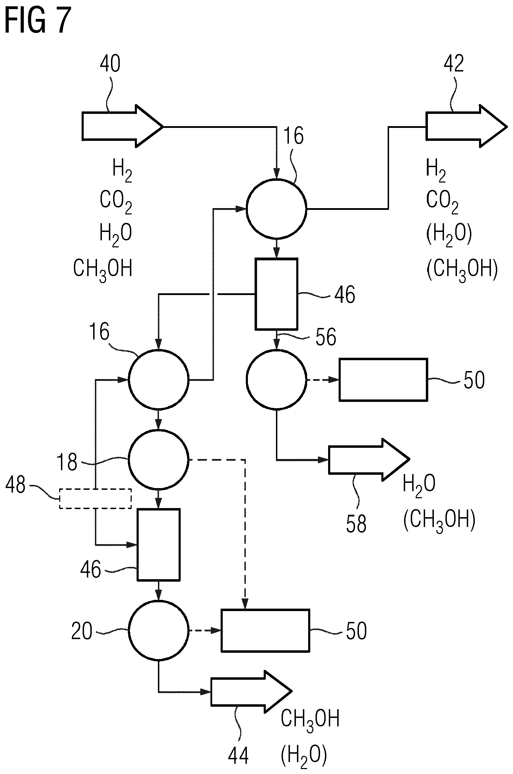

Ferner ist die wenigstens eine poröse Platte 28 mit einem insbesondere mittels Kapillarleitung gebildeten Ableitkanal 56 verbunden, bei dem ein erstes Kondensat 58 ausgeleitet werden kann. So dient die Kondensationseinrichtung 12 der FIG 6 für eine Reaktion mit einer fraktionierten Kondensation, wobei ein schematisches Ablaufdiagramm einer solchen Reaktion beispielhaft in FIG 7 gezeigt ist.

Dabei unterscheidet sich die Reaktion im Gegensatz der Reaktion der FIG 2 durch die zusätzliche Schleife und das Ausfallen eines weiteren Kondensats 58. So kann im Beispiel der Methanolherstellung eine wasserreiche Phase und eine methanolreiche Phase als jeweiliges Kondensat 44 beziehungsweise 58 auskondensiert und abgeführt beziehungsweise abgeleitet werden.

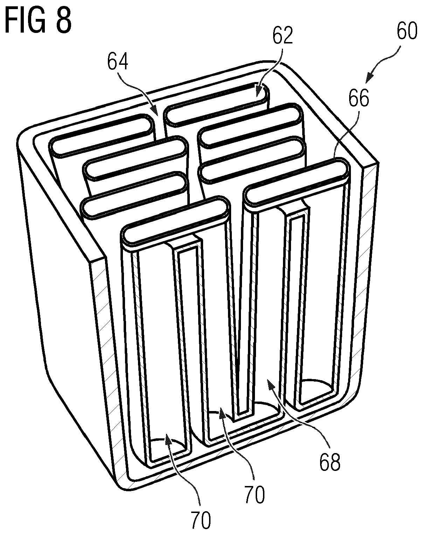

Die FIG 8 zeigt eine Ausführungsform einer wenigstens einen weiteren Wärmetauschereinheit 60, wobei die weitere Wärmetauschereinheit als Festbettrohrreaktor 62 in Kombination mit einer Heat Pipe 64, welche den Festbettrohrreaktor 62 umgibt, ausgebildet ist und nach dem Prinzip der Siedekühlung temperiert wird. Der Festbettrohrreaktor 62 weist ein Rohr 66 auf, das für einen besonders guten Wärmetausch mit der Heat Pipe 64 mäanderartig an dieser angeordnet ist und in seinem Inneren eine Festbettkatalysatorschüttung 70 aufweist. Diese dient als Katalysator für eine Reaktion in dem Fluid, so dass dadurch ein Produktstrom in die Kondensationseinrichtung 12 fließen kann. Dabei bildet das Innere des Rohrs 66 für eine besondere vorteilhafte Reaktion eine Gasaufheizzone 68.

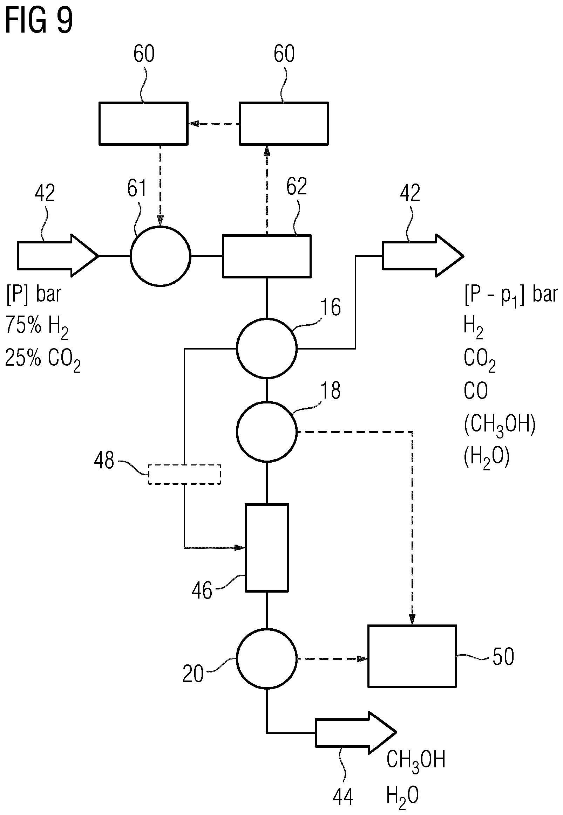

Die wenigstens einen weiteren Wärmetauschereinheit 60 kann insbesondere in einer Durchströmungsrichtung des Fluids, welche bis zur Kondensationseinrichtung 12 mit der Kondensationsrichtung 14 zusammenfällt, mit der Kondensationseinrichtung 12 in Reihe geschaltet werden. Dadurch kann die in FIG 9 gezeigte Reaktion durchgeführt werden, wobei insbesondere mittels eines warmen Kühlmediums in den als Heat Pipe 64 ausgebildeten weiteren Wärmetauschereinheit 60 eine entsprechende Vorbereitung in Form einer Temperierung stattfindet.

Des Weiteren soll hier ein Verfahren zum Bereitstellen der Kondensationseinrichtung 12 vorgestellt werden, welches insbesondere automatisch nach in Abhängigkeit von der Reaktion und somit einem Fluid beziehungsweise dem daraus zu kondensierenden Kondensat 44, 58 und/oder einer Prozesseigenschaften wenigstens eine Größe, wie die bereits gezeigten jeweiligen Plattenbreiten, Höhen oder Plattenanzahl, sowie die Porengröße, der Kondensationseinrichtung vorgegeben wird und dadurch ein dreidimensionales Modell der Kondensationseinrichtung 12 erzeugt wird, wobei das Modell im Wesentlichen aus sich wiederholenden Einheitszellen 52, gemäß den in den FIG 4 und 5 gezeigten Beispielen erzeugt wird, wobei die jeweilige Größe beispielsweise für die jeweilige Einheitszelle 52 vorgegeben wird, da sie diese charakterisiert. Die Kondensationseinrichtung 12 wird dann anhand des Modells mittels additiver Fertigung und/oder insbesondere aus einem metallischen Werkstoff einstückig gebildet. Zusätzlich oder alternativ können beispielsweise auch keramische Werkstoffe mittels additiver Fertigung erzeugt werden. Aufgrund der Tatsache, dass die Kondensationseinrichtung 12 vorteilhafterweise aus einem Werkstoff gebildet ist, ist diese besonders vorteilhaft beispielsweise am Ende ihres Nutzungszyklus recyclebar.

Das vorgestellte Verfahren dient dazu quasi eine optimierte Kondensationseinrichtung 12 automatisch zu erzeugen, wobei gegebene Materialdaten aus der additiven Fertigung und der Verfahrenstechnik dazu dienen, anhand des Modells die Kondensationseinrichtung 12 zu erzeugen. Zudem ist es wichtig die physikalischen und chemischen Stoffdaten des Gemisches, bestehend aus mindestens einer bei der Zieltemperatur kondensierbaren Komponente in mindestens einer bei der Zieltemperatur nicht kondensierbaren Komponente, Kühlwasser und Mengenströme zu kennen.

Darüber hinaus müssen für den Werkstoff beziehungsweise das Metall sowohl für Pulver als auch das massive Material mechanische und thermische Eigenschaften des massiven Materials für die additive Fertigung und jeweilige Fertigungsparametern bekannt sein.

So kann in Abhängigkeit von der gewünschten Reaktion beziehungsweise der Ausbeute auch anhand eines Katalogs funktionaler Daten der porösen Werkstoffe die Auswahl des Werkstoffes entsprechend seiner Wärmeleitfähigkeit beziehungsweise eines Wärmleitfähigkeitstensors getroffen werden. Weitere Auswahlkriterien können aufgrund von Druckverlust beziehungsweise Permeabilitätstensor insbesondere für gasförmige kompressible Gemische gemäß Darcy-Forchheimer erfolgen. Des Weiteren kann auf Daten für das Verhalten des Kondensats in den Poren zurückgegriffen werden und anhand dessen eine entsprechende Porenausgestaltung gewählt werden. So spielen beispielsweise eine Kapillargrößen, eine Oberflächenspannung und ein Kontaktwinkel eine Rolle. Dabei können ferner verschiedene poröse Materialeigenschaften gewählt werden, wie eine offene oder geschlossene Porengröße. Des Weiteren können spezielle Bereiche in den Poren ausgebildet werden.

Die Prozesstechnikeinrichtung 10 zeichnet sich insbesondere dadurch aus, dass eine geometrische Anordnung des 3D-gedruckten Werkstoffs in Verbindung mit dem nassen Gas 40 eine Temperatursenke gebildet werden kann. Daraus resultiert eine sehr geringe Masse des Wärmetauschersystems beziehungsweise der Prozesstechnikeinrichtung 10. Die Masse ermöglicht bei fluktuierendem Betrieb eine schnelle Temperaturanpassung der ersten und zweiten Wärmetauschereinheit 16 und 18 an neue Temperaturverhältnisse, da nur wenig Wärme in den Werkstoff, insbesondere den Metallkörper der Kondensationseinrichtung 12 gespeichert ist.

Aufgrund der insbesondere dünnen beziehungsweise sehr dünnen Wände des Wärmetauschersystems beziehungsweise der Wärmetauschereinheiten 16, 18, 20 werden für eine Strömungsrichtung axial (entlang Kondensationsrichtung 14), nur eine geringe Wärmeleitung, aber in Wärmetauscherrichtung radial eine sehr gute Wärmeleistung ermöglich.

Durch die Kondensationseinrichtung 12 wird insbesondere eine Kopplung von Wärmeleitung, Kondensationswärmeabfuhr, Kondensationssammlung, Kondensations- beziehungsweise Kondensatableitung und hoher Oberfläche durch den Einsatz der porösen Strukturen ermöglich wird.

Darüber hinaus ist ein besonders geringer Wärmeverlust in das Kühlwasser möglich, da nur die Kondensationswärme und die Wärme zur Unterkühlung des Kondensats 44 in das Kühlwasser 50 abgegeben werden. Die andere Wärme kann getauscht werden. In der ersten Wärmetauschereinheit 16 kann das von den kondensierbaren befreite Fluid beziehungsweise magere Gas 42 oder trockene Gas durch den hohen Energiegehalt des Massengases beziehungsweise des gesättigten Gases aufgewärmt werden. Für einen gegebenen Werkstoff beziehungsweise Metallmaterial und eine Gaszusammensetzung des gesättigten Gases, kann das Kondensationssystem unter Variationen der verschiedenen Höhen und Eindringtiefen der Platten 22, 26, 28, 30 so ausgelegt werden, dass eine optimal an die Kondensation bei erträglichem Druckverlust erzielt wird.

Für eine Oberflächenkonditionierung, beispielsweise Imprägnierung und/oder Beschichten (Coating) mit hydrophoben oder hydrophilen Substanzen, kann aufgrund von Volumina der porösen Materialien und deren freien Volumen berechenbare Menge Imprägnierflüssigkeit eingebracht werden, beispielsweise per Spritze und in dem porösen Ableitkanal 56 eingespritzt werden. Durch den wenigstens einen Kühlkanal 32 in den Platten 28, 30 kann eine sehr homogene Temperaturschichtung in den Kühlplatten erzielt werden, da ein homogenes Temperaturniveau geschaffen wird, von dem aus der Temperaturgradient nach oben steigt.

Die in der Vakuumkammer ausgebildete Gitterstruktur trägt anliegende Kräfte des Fluiddrucks und überträgt diese auf die insbesondere massiv ausgebildete beziehungsweise dick ausgebildete Außenwand. Durch die Anordnung wird Kraft ähnlich einer topologieoptimierten Struktur übertragen, aber eine Wärmeleitung blockiert. Die Anordnung ist auf die Auswirkung von Thermospannungen hinauszulegen, da der äußere Mantel kalt bleibt und das Innere beziehungsweise der Reaktionsraum sich im Systembetrieb erwärmt und wieder abkühlt.

Das Verfahren ist insbesondere als automatische Gestaltung durch eine elektrische Recheneinrichtung realisierbar, wobei durch Optimierungssysteme ein parametrisiertes Modell mit den Parametern beziehungsweise der wenigstens eine genannte Größe vorgegeben werden kann. Dadurch kann ein parametrisiertes Modell, beispielsweise in CAD in einer Multiphysiksimulation oder einer Prozessthermodynamiksimulation, mit den Materialdaten des massiven Metalls, den Materialdaten der porösen Materialien durchgeführt und eine Zielgrößenoptimierung realisiert werden. Die Zielgrößenoptimierung kann jeweils unterschiedlich formuliert sein und je nach Anforderungsaspekt beispielsweise energetische Optimierung, eine Trennschärfenoptimierung, eine Druckverlustoptimierung oder eine Optimierung des eingesetzten Metallmaterials beschreiben.

### Bezugszeichenliste

- 10: Prozesstechnikeinrichtung
- 12: Kondensationseinrichtung
- 14: Kondensationsrichtung
- 16: erste Wärmetauschereinheit
- 18: zweite Wärmetauschereinheit
- 20: dritte Wärmetauschereinheit
- 22: massive Platte
- 24: Plattenkanal
- 26: poröse Platte
- 28: massive Platte
- 30: poröse Platten
- 32: Kühlkanal
- 34: Endbereich
- 36: Sammelkanal
- 38: Bodenplatte
- 40: nasses Gas
- 42: trockenes Gas
- 44: Kondensat
- 46: Phasenscheider
- 48: Solltemperatur
- 50: Kühlwasser
- 52: Einheitszelle
- 54: Brücke
- 56: Ableitkanal
- 58: Kondensat
- 60: Wärmetauschereinheit
- 62: Festbettrohrreaktor
- 64: Heatpipe
- 66: Rohr
- 68: Gasaufheizzone
- 70: Festbettkatalysatorschüttung

## Patentansprüche

1. Prozesstechnikeinrichtung (10) mit einer Kondensationseinrichtung (12) für die Kondensation eines gasförmigen Fluids mit mehreren entlang einer Kondensationsrichtung (14) des Fluids hintereinander angeordneten Wärmetauschereinheiten (16, 18, 20), wobei
eine erste der Wärmetauschereinheiten (16) durch mehrere zueinander parallel beabstandet angeordnete massive Platten (22) ausgebildet ist, und jeweils zwei benachbarte Platten (22) jeweils einen in Kondensationsrichtung (14) orientierten Plattenkanal (24) ausbilden, und
eine zweite der Wärmetauschereinheiten (18), durch poröse Platten (26) ausgebildet ist, welche jeweils die Platten (22) der ersten Wärmetauschereinheit (16) nahtlos fortführen, und eine dritte der Wärmetauschereinheiten (20) aus sich abwechselnden aneinander liegenden massiven Platten (28) und porösen Platten (30) ausgebildet ist, welche im Wesentlichen senkrecht zu den Platten (22, 26) der ersten und zweiten Wärmetauschereinheit (16, 18) angeordnet sind und wenigstens einen Kühlkanal (32) und in einem in Kondensationsrichtung (14) liegenden Endbereich (34) einen Sammelkanal (36) aufweisen und
die mehreren Wärmetauschereinheiten (16, 18, 20) monolithisch ausgebildet sind.

2. Prozesstechnikeinrichtung (10) nach Anspruch 1, **dadurch gekennzeichnet, dass** die Kondensationseinrichtung (12) in einem von einer eine Einlassöffnung und eine Auslassöffnung aufweisenden Wandung begrenzten Reaktionsraum derart angeordnet ist, dass seine Kondensationsrichtung (12) mit der Einlassöffnung und der Auslassöffnung korrespondiert.

3. Prozesstechnikeinrichtung (10) nach Anspruch 1 oder 2, **dadurch gekennzeichnet, dass** die Kondensationseinrichtung (12) einstückig aus einem Werkstoff ausgebildet ist.

4. Prozesstechnikeinrichtung (10) nach einem der vorhergehenden Ansprüche, **dadurch gekennzeichnet, dass** die dritte Wärmetauschereinheit (20) wenigstens zwei Kühlkanäle (32) aufweist und diese durch eine jeweilige Brücke (54), die in der jeweiligen massive Platte (28) ausgebildet ist, verbunden sind.

5. Prozesstechnikeinrichtung (10) nach einem der vorhergehenden Ansprüche, **dadurch gekennzeichnet, dass** entlang einer Durchströmungsrichtung vor der ersten Wärmetauschereinheit (16) wenigstens eine weitere Wärmetauschereinheit (60) und insbesondere zwei Wärmetauschereinheiten (60) angeordnet sind.

6. Prozesstechnikeinrichtung (10) nach Anspruch 5, **dadurch gekennzeichnet, dass** die wenigstens eine weitere Wärmetauschereinheit (60) als Reaktor und/oder als Wärmerohr, die erste Wärmetauschereinheit (16) als Plattenwärmetauscher und/oder Gegenstromkühler, die zweite Wärmetauschereinheit (18) als Kondensor und/oder als Kondensationssammler, die dritte Wärmetauschereinheit (20) als Unterkühler ausgebildet sind.

7. Prozesstechnikeinrichtung (10) nach einem der vorhergehenden Ansprüche, **dadurch gekennzeichnet, dass** Kondensationseinrichtung (12) wenigstens zwei aneinandergrenzende erste Wärmetauschereinheiten (16) aufweist und in wenigstens der in Kondensationsrichtung (14) hinten liegende der ersten Wärmetauschereinheiten (16) einer der massiven Platten (22) zumindest teilweise durch eine poröse Platte (28) ersetzt ist.

8. Prozesstechnikeinrichtung (10) nach einem der Anspruch 7, **dadurch gekennzeichnet, dass** die wenigstens eine poröse Platte (28) mit einen, insbesondere mittels Kapillarleitung gebildeten, Ableitkanal (56) verbunden ist.

9. Prozesstechnikeinrichtung (10) nach einem der Ansprüche 2 bis 9, **dadurch gekennzeichnet, dass** die Wandung doppelwandig mit einer zwischen zwei Wänden liegen Vakuumkammer ausgebildet ist, wobei die inliegenden der Wände dünner als die außenliegende ist und in der Vakuumkammer eine Gitterstruktur ausgebildet ist.

10. Verfahren zum Bereitstellen einer Kondensationseinrichtung (12) für eine Prozesstechnikeinrichtung (10) nach einem der vorhergehenden Ansprüche, wobei in Abhängigkeit von einem Fluid, einem daraus zu kondensierenden Kondensat und/oder einer Prozesseigenschaft, wenigstens eine Größe der Kondensationseinrichtung (12) vorgegeben wird und dadurch ein dreidimensionales Modell der Kondensationseinrichtung (12) erzeugt wird.

11. Verfahren nach Anspruch 10, **dadurch gekennzeichnet, dass** das Modell im Wesentlichen aus sich wiederholenden Einheitszellen (52) gebildet wird und die wenigstens eine vorgegebene Größe die jeweilige Einheitszelle (52) charakterisiert.

12. Verfahren nach Anspruch 10 oder 11, **dadurch gekennzeichnet, dass** die Kondensationseinrichtung (12) anhand des Modells mittels additiver Fertigung und/oder aus einem metallischen Werkstoff gebildet ist.
